(19) **Europäisches Patentamt**
**European Patent Office**
**Office européen des brevets**

(11) **EP 1 819 117 B1**

(12) **EUROPEAN PATENT SPECIFICATION**

(45) Date of publication and mention
of the grant of the patent:
**29.12.2010 Bulletin 2010/52**

(51) Int Cl.:
***H04L 27/26*** (2006.01)  ***H04L 1/00*** (2006.01)

(21) Application number: **06020433.6**

(22) Date of filing: **28.09.2006**

(54) **Method and system for randomized puncturing in mobile communication systems**

Verfahren und System für zufälliges Punktieren in mobilen Kommunikationssystemen

Méthode et système pour poinçonnage aléatoire dans systèmes mobiles de communication

(84) Designated Contracting States:
**DE FR GB**

(30) Priority: **14.02.2006 US 353722**

(43) Date of publication of application:
**15.08.2007 Bulletin 2007/33**

(73) Proprietor: **Broadcom Corporation**
**Irvine, CA 92617 (US)**

(72) Inventors:
• **Landau, Itamar**
**94704 Berkeley**
**CA (US)**

• **Landau, Uri**
**92122 San Diego**
**CA (US)**

(74) Representative: **Jehle, Volker Armin et al**
**Bosch Jehle Patentanwaltsgesellschaft mbH**
**Flüggenstrasse 13**
**80639 München (DE)**

(56) References cited:
**EP-A- 0 608 079**      **US-A- 5 710 785**
**US-A1- 2005 091 567**

**Description**

FIELD OF THE INVENTION

Certain embodiments of the invention relate to communication receivers. More specifically, certain embodiments of the invention relate to a method and system for randomized puncturing in mobile communication receivers.

BACKGROUND OF THE INVENTION

The Universal Mobile Telecommunications System (UMTS) in its third generation (3G) is intended to provide a wide range of services including telephony, paging, messaging, Internet and broadband data. The International Telecommunication Union (ITU) started the process of defining the standard for third generation systems, referred to as International Mobile Telecommunications 2000 (IMT-2000). In Europe, European Telecommunications Standards Institute (ETSI) was responsible for the UMTS standardization process. In 1998, the Third Generation Partnership Project (3GPP) was formed to continue the technical specification work. The 3GPP has five main UMTS standardization areas: radio access network, core network, terminals, services and system aspects and GSM EDGE radio access network (GERAN).

The 3G Radio Access Technology (UTRAN) is based on the wideband code-division multiple-access (WCDMA) technology. The 3G/UMTS has been specified as an integrated solution for mobile voice and data with wide area coverage. The 3G/UMTS in its initial phase offers theoretical bit rates of up to 384 kbps in high mobility situations, rising as high as 2 Mbps in stationary/nomadic user environments and has been universally standardized via the Third Generation Partnership Project (www.3gpp.org) by using globally harmonized spectrum in paired and unpaired bands.

The 3G/UMTS networks using WCDMA technology are operating commercially worldwide in Asia, Europe, US and Japan. It offers mobile operators significant capacity and broadband capabilities to support greater numbers of voice and data customers, especially in urban centers with higher data rates. The symmetry between uplink and downlink data rates when using paired frequency division duplex (FDD) spectrum indicates that 3G/UMTS is ideally suited for applications such as real-time video telephony in contrast with other technologies such as asymmetric digital subscriber line (ADSL), where there is a pronounced asymmetry between uplink and downlink throughput rates.

The throughput speeds of the WCDMA Radio Access Network (RAN) may be further increased in the future. High speed downlink packet access (HSDPA) and high speed uplink packet access (HSUPA) technologies are already standardized and are undergoing network trials with operators in the Far East and North America. These technologies may play an instrumental role in positioning 3G/UMTS as a key enabler for true 'mobile broadband' by promising theoretical downlink speeds as high as 14.4 Mbps and 5.8 Mbps uplink, for example. The 3G/UMTS will offer enterprise customers and consumers all the benefits of broadband connectivity whilst on the move by offering data transmission speeds of the same order of magnitude as today's Ethernet-based networks that are an ubiquitous feature of the fixed-line environment. HSDPA implementations may include adaptive modulation and coding (AMC), multiple-input multiple-output (MIMO), hybrid automatic request (HARQ), fast cell search, and advanced receiver design.

The GPRS and EDGE technologies may be utilized for enhancing the data throughput of present second generation (2G) systems such as GSM. The GSM technology may support data rates of up to 14.4 kilobits per second (Kbps), while the GPRS technology, may support data rates of up to 115 Kbps by allowing up to 8 data time slots per time division multiple access (TDMA) frame. The GSM technology, by contrast, may allow one data time slot per TDMA frame. The EDGE technology, may support data rates of up to 384 Kbps. The EDGE technology may utilizes 8 phase shift keying (8-PSK) modulation for providing higher data rates than those that may be achieved by GPRS technology. The GPRS and EDGE technologies may be referred to as "2.5G" technologies.

The UMTS technology, with theoretical data rates as high as 2 Mbps, is an adaptation of the WCDMA 3G system by GSM. One reason for the high data rates that may be achieved by UMTS technology stems from the 5MHz WCDMA channel bandwidths versus the 200 KHz GSM channel bandwidths. The HSDPA technology is an Internet protocol (IP) based service, oriented for data communications, which adapts WCDMA to support data transfer rates on the order of 10 megabits per second (Mbits/s). Developed by the 3GPP group, the HSDPA technology achieves higher data rates through a plurality of methods. For example, many transmission decisions may be made at the base station level, which is much closer to the user equipment as opposed to being made at a mobile switching center or office. These may include decisions about the scheduling of data to be transmitted, when data is to be retransmitted, and assessments about the quality of the transmission channel. The HSDPA technology may also utilize variable coding rates. The HSDPA technology may also support 16-level quadrature amplitude modulation (16-QAM) over a high-speed downlink shared channel (HS-DSCH), which permits a plurality of users to share an air interface channel

In some instances, HSDPA may provide a two-fold improvement in network capacity as well as data speeds up to five times (over 10 Mbit/s) higher than those in even the most advanced 3G networks. HSDPA may also shorten the roundtrip time between network and terminal, while reducing variances in downlink transmission delay. These performance advances may translate directly into improved network performance and higher subscriber satisfaction. Since HSDPA is an extension of the GSM family, it also builds directly on the economies of scale offered by the world's most popular mobile technology. HSDPA may offer breakthrough advances in WCDMA network packet data capacity, enhanced spectral and radio access networks (RAN) hardware efficiencies, and streamlined network implementations. These improvements may directly translate into lower cost-per-bit, faster and more available services, and a network that is positioned to compete more effectively in the data-centric markets of the future.

The capacity, quality and cost/performance advantages of HSDPA yield measurable benefits for network operators, and, in turn, their subscribers. For operators, this backwards-compatible upgrade to current WCDMA networks is a logical and cost-efficient next step in network evolution. When deployed, HSDPA may co-exist on the same carrier as the current WCDMA Release 99 services, allowing operators to introduce greater capacity and higher data speeds into existing WCDMA networks. Operators may leverage this solution to support a considerably higher number of high data rate users on a single radio carrier. HSDPA makes true mass-market mobile IP multimedia possible and will drive the consumption of data-heavy services while at the same time reducing the cost-per-bit of service delivery, thus boosting both revenue and bottom-line network profits. For data-hungry mobile subscribers, the performance advantages of HSDPA may translate into shorter service response times, less delay and faster perceived connections. Users may also download packet-data over HSDPA while conducting a simultaneous speech call.

HSDPA may provide a number of significant performance improvements when compared to previous or alternative technologies. For example, HSDPA extends the WCDMA bit rates up to 10 Mbps, achieving higher theoretical peak rates with higher-order modulation (16-QAM) and with adaptive coding and modulation schemes. The maximum QPSK bit rate is 5.3 Mbit/s and 10.7 Mbit/s with 16-QAM. Theoretical bit rates of up to 14.4 Mbit/s may be achieved with no channel coding. The terminal capability classes range from 900 kbit/s to 1.8 Mbit/s with QPSK modulation, and 3.6 Mbit/s and up with 16-QAM modulation. The highest capability class supports the maximum theoretical bit rate of 14.4 Mbit/s.

Further limitations and disadvantages of conventional and traditional approaches will become apparent to one of skill in the art, through comparison of such systems with some aspects of the present invention as set forth in the remainder of the present application with reference to the drawings.

EP 0 608 079 refers to a forward error correcting transmitter comprising error correcting encoding means which error-correcting-encodes a digital signal to obtain an error-correcting-encoded signal; interleaving means comprising a memory being composed of rows and columns and permitting read and write of said error-correcting-encoded signal, and a memory control means which controls said memory, when writing in said memory, so as to write said error-correcting-encoded signal row by row in a prescribed fixed sequence in each row, and controls said memory, when reading out from said memory, so as to read out said error-correcting-encoded signal written in said memory sequentially in one direction in each column alternately reversing the direction column by column; a modulating means which modulates said error-correcting-encoded signal read out from said memory to obtain a modulated signal; and a transmitting means providing a transmitting signal from said modulated signal.

US 2005/091567 describes a method and an apparatus for generating and performing digital communications using a generated randomized interleaver. A pseudo random interleaver of size n*m is generated from a set of seed values. The interleaver of size N=n*m is defined by dividing the N possible addresses in the interleaver (0-N-1) into n subsets. The subsets are generated from a single value within the subset either using an algorithm or a memory based lookup table. The set of n seeds comprises one value selected from each subset.

US 5,710,785 describes a method in which convolutional code symbols are sequentially stored into a first buffer at a transmission rate and read therefrom into a decoder where the symbols are decoded at a rate higher than the transmission rate and stored into a second buffer.

According to the invention, there are provided a method for handling signals in a communication system as defined by independent claim 1, a machine-readable storage as defined by independent claim 6, and a system for handling signals in a communication system as defined by independent clam 7.

Further advantageous features of the invention are defined by the dependent subclaims.

A system and/or method for randomized puncturing in mobile communication systems, substantially as shown in and/or described in connection with at least one of the figures, as set forth more completely in the claims.

Advantageously, the method further comprises storing said calculated final address of said at least one of said information bits in said received bitstream in a virtual buffer based on a value of said calculated final address.

Advantageously, the method further comprises slicing at least a portion of said information bits in said received bitstream to calculate a value of said final address.

Advantageously, the method further comprises combining at least a portion of said information bits in said received bitstream belonging to a particular symbol based on said value of said calculated final address.

Advantageously, said functional data processing path processes a symbol amplitude of at least a portion of said information bits in said received bitstream.

Advantageously, the method further comprises partitioning at least one symbol corresponding to a portion of said information bits in said received bitstream into a plurality of soft bits for said calculation of said final address.

Advantageously, the machine-readable storage further comprises code for storing said calculated final address of said at least one of said information bits in said received bitstream in a virtual buffer based on a value of said calculated final address.

Advantageously, the machine-readable storage further comprises code for slicing at least a portion of said information bits in said received bitstream to calculate a value of said final address.

Advantageously, the machine-readable storage further comprises code for combining at least a portion of said information bits in said received bitstream belonging to a particular symbol based on said value of said calculated final address.

Advantageously, said functional data processing path processes a symbol amplitude of at least a portion of said information bits in said received bitstream.

Advantageously, the machine-readable storage further comprises code for partitioning at least one symbol corresponding to a portion of said information bits in said received bitstream into a plurality of soft bits for said calculation of said final address.

Advantageously, said functional address processing path comprises at least one of: channel interleaving, a QPSK to QAM addressing, channel offsetting, de-bit collecting, and de-rate-matching.

Advantageously, said de-bit collecting generates a sequential order of a plurality of bit addresses for said information bits in said received bitstream.

Advantageously, said de-bit rate matching streams said information bits in said received bitstream into at least one of: systematic de-rate matching, parity-1 de-rate matching, and parity-2 de-rate matching based on a bit type associated with said information bits in said received bitstream.

Advantageously, the system further comprises circuitry that enables storage of said calculated final address of said at least one of said information bits in said received bitstream in a virtual buffer based on a value of said calculated final address.

Advantageously, the system further comprises circuitry that enables slicing at least a portion of said information bits in said received bitstream to calculate a value of said final address.

Advantageously, the system further comprises circuitry that enables combining at least a portion of said information bits in said received bitstream belonging to a particular symbol based on said value of said calculated final address.

Advantageously, said functional data processing path enables processing of a symbol amplitude of at least a portion of said information bits in said received bitstream.

Advantageously, the system further comprises circuitry that enables partitioning at least one symbol corresponding to a portion of said information bits in said received bitstream into a plurality of soft bits for said calculation of said final address.

These and other advantages, aspects and novel features of the present invention, as well as details of an illustrated embodiment thereof, will be more fully understood from the following description and drawings.

## BRIEF DESCRIPTION OF SEVERAL VIEWS OF THE DRAWINGS

FIG. 1A illustrates an exemplary HSDPA distributed architecture that may be utilized in connection with an embodiment of the invention.

FIG. 1B is a block diagram that illustrates exemplary partitioning of the physical layer of a HSDPA receiver into a plurality of functional blocks, which may be utilized in connection with an embodiment of the invention.

FIG. 2 is a block diagram that illustrates functional partitioning of the transmit side of HSDPA bit processing, which may be utilized in connection with an embodiment of the invention.

FIG. 3 is a block diagram illustrating partitioning of HSDPA bit processing into a data path and an address path, in accordance with an embodiment of the invention.

FIG. 4 is a block diagram illustrating partitioning of the data path and the address path into two cascaded sequences of functional blocks, in accordance with an embodiment of the invention.

FIG. 5 is a block diagram illustrating exemplary partitioning of the bit collection buffer into a plurality of domains, in accordance with an embodiment of the invention.

FIG. 6 is a block diagram illustrating another embodiment of an exemplary partitioning of the bit collection buffer into a plurality of domains, in accordance with an embodiment of the invention.

## DETAILED DESCRIPTION OF THE INVENTION

Certain aspects of a method and system for handling signals in a communication system may include partitioning processing of a plurality of information bits in a received bitstream into a functional data processing path and a functional address processing path. A final address of at least one of the information bits in the received bitstream may be calculated within a transmission time interval. The calculated final address of at least one of the information bits in the bitstream may be stored in a virtual buffer based on a value of the calculated final address.

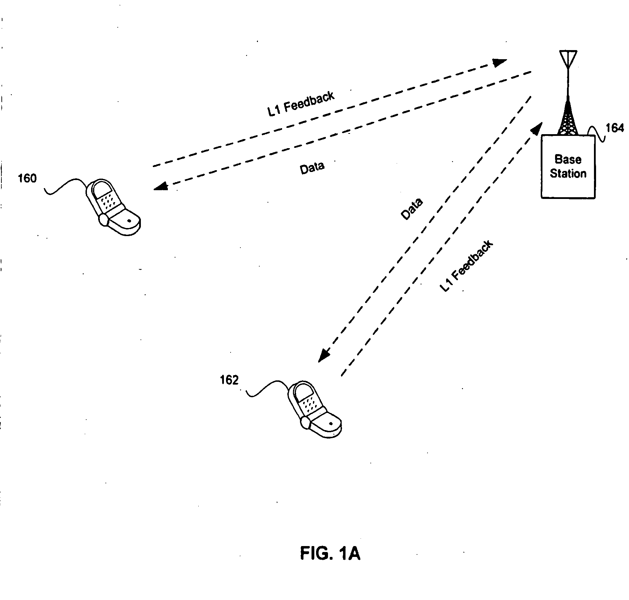

FIG. 1A illustrates an exemplary HSDPA distributed architecture that may be utilized in connection with an embodiment of the invention. Referring to FIG. 1A, there is shown terminals 110 and 112 and a base station (BS) 114. HSDPA is built on a distributed architecture that achieves low delay link adaptation by placing key processing at the BS 114 and thus closer to the air interface as illustrated. Accordingly, the MAC layer at the BS 114 is moved from Layer 2 to Layer 1, which implies that the systems may respond in a much faster manner with data access. Fast link adaptation methods, which are generally well established within existing GSM/EDGE standards, include fast physical layer (L1) retransmission combining and link adaptation techniques. These techniques may deliver significantly improved packet data throughput performance between the mobile terminals 110 and 112 and the BS 114.

The HSDPA technology employs several important new technological advances. Some of these may comprise scheduling for the downlink packet data operation at the BS 114, higher order modulation, adaptive modulation and coding, hybrid automatic repeat request (HARQ), physical layer feedback of the instantaneous channel condition, and a new transport channel type known as high-speed downlink shared channel (HS-DSCH) that allows several users to share the air interface channel. United States Application Serial No. _____ (Attorney Docket No. 17269US01) filed on even date herewith discloses a detailed description of a method and system for bufferless HARQ for supporting HSDPA and is hereby incorporated by reference in its entirety. When deployed, HSDPA may co-exist on the same carrier as the current WCDMA and UMTS services, allowing operators to introduce greater capacity and higher data speeds into existing WCDMA networks. HSDPA replaces the basic features of WCDMA, such as variable spreading factor and fast power control, with adaptive modulation and coding, extensive multicode operation, and fast and spectrally efficient retransmission strategies.

In current-generation WCDMA networks, power control dynamics are on the order of 20 dB in the downlink and 70 dB in the uplink. WCDMA downlink power control dynamics are limited by potential interference between users on parallel code channels and by the nature of WCDMA base station implementations. For WCDMA users close to the base station, power control may not reduce power optimally, and reducing power beyond the 20 dB may therefore have only a marginal impact on capacity. HSDPA, for example, utilizes advanced link adaptation and adaptive modulation and coding (AMC) to ensure all users enjoy the highest possible data rate. AMC therefore adapts the modulation scheme and coding to the quality of the appropriate radio link.

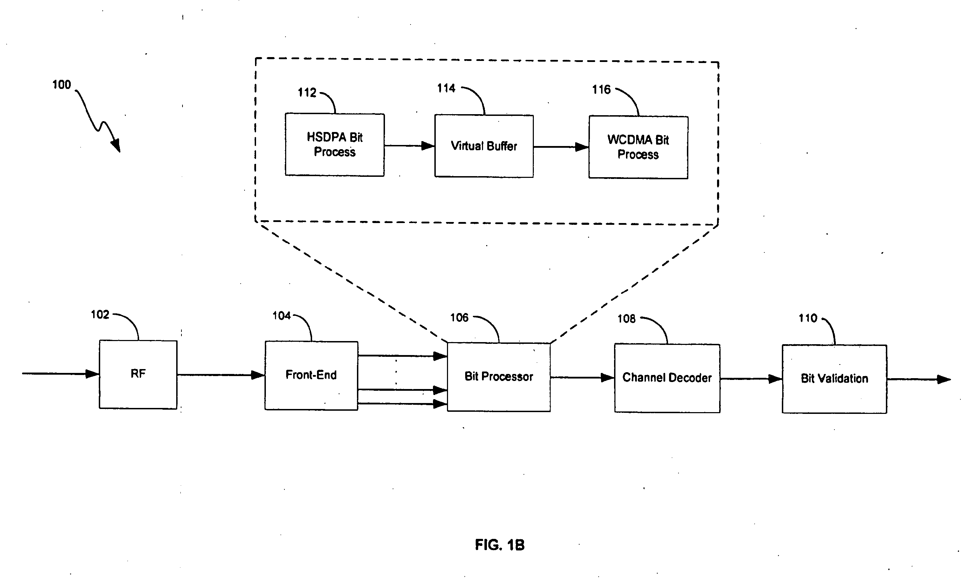

FIG. 1 B is a block diagram that illustrates exemplary partitioning of the physical layer of a HSDPA receiver into a plurality of functional blocks, which may be utilized in connection with an embodiment of the invention. Referring to FIG. 1 B, a physical layer of a WCDMA based mobile technology, also known as user equipment (UE) 100 may comprise a RF block 102, a front-end block 104, a bit-processor 106, a decoder block 108 and a bit-validation block 110. The bit processor block 106 may comprise a HSDPA bit process block 112, a virtual buffer block 114 and a WCDMA bit process block 116.

The RF block 102 may comprise suitable logic, circuitry and/or code that may enable conversion of the electromagnetic wave transmitted by the network transmitter or base-station into an electric signal which is filtered and amplified through its receiver antenna and the frequency may be shifted to baseband. The signal may be sampled, converted to a numeric representation and output to the front-end block 104. The front-end block 104 may comprise suitable logic, circuitry and/or code that may enable performance of numerous operations whereby the in-phase (I) and the quadrature (Q) chip values may be combined, where the chip frequency is 3.84 mHz, for example. Each of the 16 sequential values of I and Q may be projected on a set of orthogonal sequences, orthogonal variable spreading factor (OVSF) vectors, codes or functions and combined into a set of symbols, where a symbol may be represented by two numeric values, the in-phase component (I) and the quadrature component (Q).

The UE 100 may be allocated by the network k with k = 1...15 OVSF functions. Due to the projection operation, at each chip-time, k symbols may be created. The rate of generating symbols may be chip-rate/16 = 3.84 mHz/16 = 240 kHz, for example. In HSDPA, the duration of receiving data may be partitioned into a TTI of 2 milliseconds, for example. The number of symbols per TTI may be k x 480 symbols. The number k of OVSF functions allocated to the UE 100 may indicate that a network may be employed to control the rate of receiving data by the UE 100. The number of OVSF functions represents a physical constraint of transmitting/receiving rate and may be referred to as a physical channel (Phy-Ch). For example, a mobile with k = 1 indicates that one OVSF function or one Phy-Ch is being allocated to the UE 100. The mobile may receive 480 symbols per TTI, for example, and this rate may be doubled by setting k = 2, for example. In this case, the mobile simultaneously receives two streams of 480 symbols each, for example. The total symbol rate may directly indicate the data rate the UE 100 receives.

Each pair I,Q of a symbol may represent a pair of soft bits when QPSK modulation is used. Alternatively, the I,Q pair may pass through a slicing process whereby the two soft bits may be partitioned into 4 soft bits when QAM16 modulation is utilized. The numeric value or amplitude of a soft bit represents the certainty or probability that the bit is either one or zero. The multiple streams of soft bits may be input to the bit-processor block 106.

The bit-processor block 106 may comprise suitable logic, circuitry and/or code that may be enabled to partition the received multiple streams of soft bits into two processes, the WCDMA bit process and the HSDPA bit process. The WCDMA bit process block 116 may process a portion of the multiple streams of received soft bits based on the WCDMA standard and includes a de-rate matching process that may be applied to the parity-1 bits and to parity-2 bits. The de-rate matching process may include reversing the rate matching process and mapping the received bits into their original addresses. It facilitates reading the bits from the virtual buffer block 114 and writing the bits in the appropriate encoder buffer addresses enabling the channel decoding carried out in the channel decoder block 108.

The HSDPA process block 112 may process a portion of the multiple streams of received soft bits based on the HSDPA standard and may enable retransmission of an encoded block associated with a given TTI that failed to be decoded. The decoding of a data block may be carried out over several TTI's and the blocks of several processes may be stored in the virtual buffer 114. An uplink to the base station may report the success by an acknowledgement (ACK) packet or the failure by a no acknowledgement (NACK) packet. The HSDPA process block 112 may be enabled to decode a block by facilitating the retransmit, or alternatively, initiating the transmit of a new block of data. A downlink channel known as HSDPA shared control channel (HSCCH), which is shared by all HSDPA users, may be received at each TTI. Its content identifies the UE 100 and it includes the necessary parameters that facilitate the decoding of the current data content of the current TTI.

The reliability of the received data may be enhanced either by combining bits that are re-transmitted or by enlarging the dimensionality of the block. The channel decoder 108 may be capable of decoding a block based on a received punctured block of bits. The bit validation block 110 may be enabled to decode a block of bits in HSDPA that may be cast as a process, over several TTI not necessarily sequentially, and the reliability of the received bits may be gradually improved until correct encoding is possible.

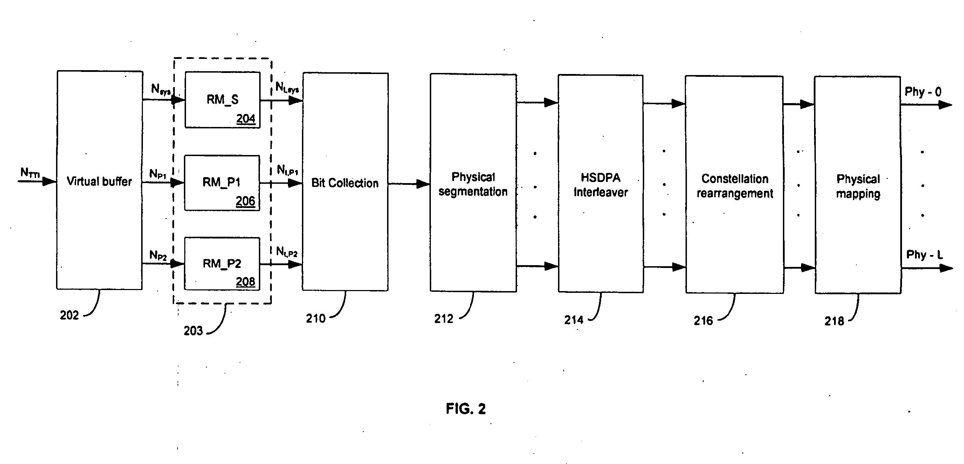

FIG. 2 is a block diagram illustrating functional partitioning of the transmit side of HSDPA bit processing that may be utilized in connection with an embodiment of the invention. Referring to FIG. 2, there is shown a virtual buffer block 202, a second rate matching block 203, a bit collection block 210, a physical segmentation block 212, a HSDPA interleaver block 214, a constellation rearrangement block 216 and a physical mapping block 218. The second rate matching block 203 may comprise a plurality of rate matching blocks, for example, a systematic rate matching stream (RM_S) block 204, a parity-1 rate matching stream block 206, and a parity-2 rate matching stream block 208.

FIG. 2 illustrates the partitioning of the received bitstreams on the transmit side into cascaded address mapping functions. The virtual buffer 202 may comprise suitable logic, circuitry and/or code that may be enabled to receive a bitstream $N_{TTI}$ and generate a plurality of bitstreams, a systematic bitstream $N_{sys}$, a parity-1 bitstream $N_{p1}$ and a parity-2 bitstream $N_{p2}$. The $N_{sys}$ bitstream may be passed through a systematic rate matching (RM_S) block 204 to generate a bitstream $N_{t,sys}$. The $N_{p1}$ bitstream may be passed through a parity-1 rate matching (RM_P1) block 206 to generate a bitstream $N_{t,p1}$. The $N_{p2}$ bitstream may be passed through a parity-1 rate matching (RM_P2) block 208 to generate a bitstream $N_{t,p2}$. The second rate matching block 203 may enable choosing of the pseudo random addresses and not transmit their bits. This process maps the three stream addresses' range to a range dictated by the hardware (HW) symbol rate. The second rate matching block 203 may enable bit puncturing by omitting bits by predefined schemes, for example, a systematic rate matching stream, a parity-1 rate matching stream, and a parity-2 rate matching stream. The second rate matching block 203 may be enabled to match the required fixed rate dictated by the hardware. The three rate matching processes may be parameterized by enabling the UE to re-map the received stream of bits to their original location.

The bit collection block 210 may comprise suitable logic, circuitry and/or code that may enable writing of the three bitstreams column wise into a square array with 3 predefined domains for the three bit types, for example, systematic, parity-1 and parity-2. The bitstreams may be read full column-wise, for example, 2 rows in the case of QPSK and 4-rows in the case of QAM16. Each column may represent a symbol pair or four bits, for example. The physical segmentation block 212 may enable partitioning of the single symbol stream into L streams, where L = 1...15. The first 480 symbols may be associated with physical channel (Phy-Ch) 1, for example, the second 480 symbols may be associated with Phy-Ch 2, for example, and so on. Each of the 480 symbols may be passed through the HSDPA interleaver block 214. In the case of QAM modulation, each of the 4 bits may be passed through the constellation rearrangement block 216 for further mapping. The physical mapping block 218 may be enabled to assign each Phy-Ch to the 15 OVSF codes, for example, and 2 or 4 bits may be assigned to the I and Q values.

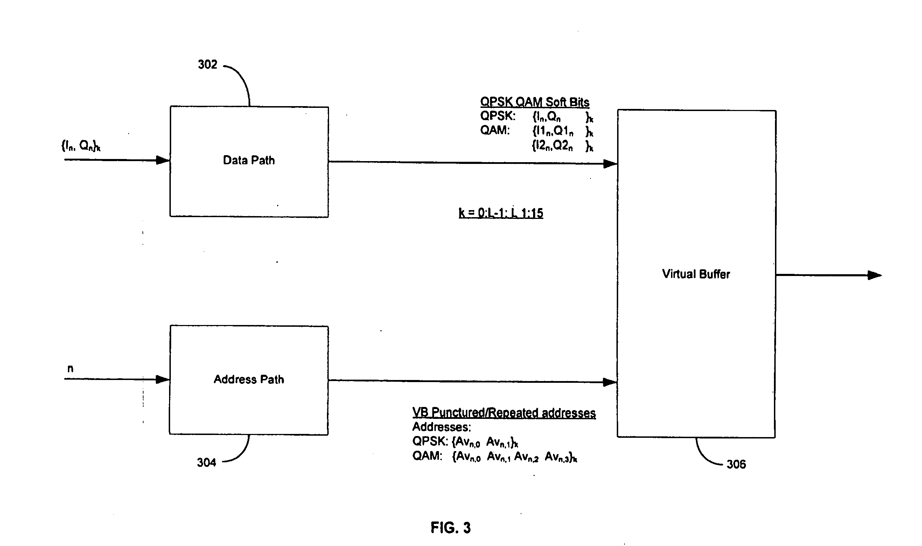

FIG. 3 is a block diagram illustrating partitioning of HSDPA bit processing into a data path and an address path, in accordance with an embodiment of the invention. Referring to FIG. 3, there is shown a data path block 302, a address path block 304 and a virtual buffer block 306. The HSDPA bit process may be divided into two paths, a data processing path performed by the data path block 302 and an address processing path performed by the address path block 304. The data path block 302 may enable processing of the symbol amplitude and the address path block 304 may enable calculation of the address of a symbol at the virtual buffer block 306. At each path the incoming symbols may be processed on the fly. The arrived symbol may be partitioned into soft bits that are stored at their final destination in the virtual buffer block 306, eliminating the need for the intermediate buffers. A bit processor with lower circuitry complexity measured by the number of gates may be obtained with the elimination of read-write operations that otherwise would be required thus reducing the time and dissipated power.

The input to the address path block 304 is the symbol number n, for n = 0...480 - 1, for example. Given the set of parameters associated by the current HSDPA process, a set of two addresses or four addresses may be calculated in the case of QPSK or QAM modulation respectively. In the case of QAM modulation, the data path block 302 may enabled slicing of the received symbol, whereby the symbol amplitudes may be partitioned into four soft bits. For each symbol index n, L, where L = 1...15, simultaneous symbols may be received, each one associated with a Phy-Ch. This process may be repeated for k = O...L-1 for each occurrence of n.

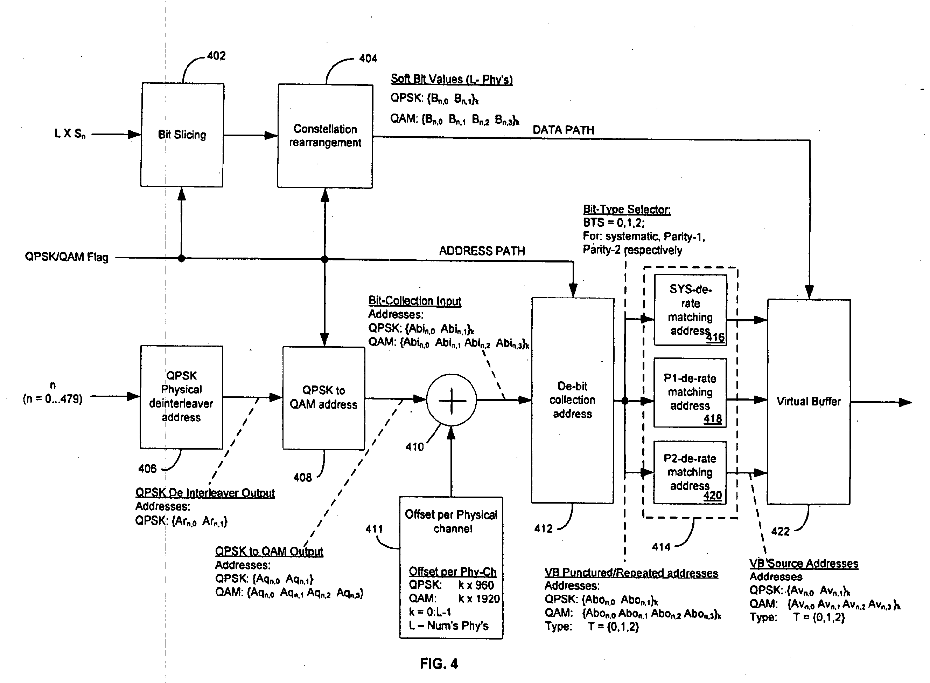

FIG. 4 is a block diagram illustrating partitioning of the data path and the address path into two cascaded sequences of functional blocks, in accordance with an embodiment of the invention. Referring to FIG. 4, there is shown a bit slicing block 402, a constellation rearrangement block 404, a quadrature phase shift keying (QPSK) physical de-interleaver block 406, a QPSK to quadrature amplitude modulation (QAM) address block 408, a physical address de-segmentation block 410, an offset per physical channel block 411, a de-bit collection address block 412, a de-rate matching address block 414 and a virtual buffer block 422.

The bit slicing block 402 may comprise suitable logic, circuitry and/or code that may be enabled to receive L x 480 symbols, for L = 1...15, for example, during a TTI. At each symbol time n, for n = 0...480-1, for example, L simultaneous symbols may be processed. The constellation rearrangement block 404 may comprise suitable logic, circuitry and/or code that may enable generation of the soft bit values for the L physical segments (Phy's) for QPSK $\{B_{n,0}\ B_{n,1}\}_k$ or QAM $\{B_{n,0}\ B_{n,1}\ B_{n,2}\ B_{n,3}\}_k$ where k = 0...L-1, for example.

The cascaded operations that are performed along the address path are defined in the HSDPA standard as operations on a complete TTI data block that may be transferred in its entirety from block to block. This process, as defined in the HSDPA standard, may require the use of intermediate buffers in order to store each TTI data block. In an embodiment of the invention, a complete execution of the operations along the address path may be carried out for each symbol as it is received. The associated bits may be stored in their final locations in the virtual buffer 422 without requirement of any intermediate buffer.

The QPSK physical de-interleaver block 406 may comprise suitable logic, circuitry and/or code that may enable generation at each symbol time indicator n, where n = 0...479 two addresses $Ar_{n,0}$ and $Ar_{n,1}$ according to the following algorithm. The values $n_I$, $n_Q$ may be identified for I and Q given the symbol location n according to the following equations:

$$n_I = 2n$$

$$n_Q = 2n+1$$

For $n_I$ the pair $\{j_I, k_I\}$ may be generated and for $n_Q$ the pair $\{j_Q, k_Q\}$ may be generated such that

$$j_I = n_I\ \text{Modulo32}$$

$$k_I = (n_I - j_I)/32$$

$$j_Q = n_Q\ \text{Modulo32}$$

$$k_Q = (n_Q - j_Q)/32$$

The addresses $Ar_{n,0}$ and $Ar_{n,1}$ may be generated according to the following equations:

$$Ar_{n,0} = j_I \times 30\ +\ P2(k_I)$$

$$Ar_{n,1} = j_Q \times 30 + P2(k_Q)$$

where $Ar_{n,0}$, $Ar_{n,1}$ are the de-interleaved addresses and P2(0:29) is a column permutation table established by the HSDPA standard.

The QPSK to QAM address block 408 may comprise suitable logic, circuitry and/or code that may enable generation of $\{Aq_{n,0}, Aq_{n,1}\}$ according to the following equations if the modulation utilized is QPSK:

$$Aq_{n,0} = Ar_{n,0}$$

$$Aq_{n,1} = Ar_{n,1}$$

In the case of QAM, the address space may be doubled to 0...1919, for example, according to the following equations:

$$\text{if } Ar_{n,0} \text{ is even,} \qquad Aq_{n,0} = 2 \times Ar_{n,0}$$

$$\text{else} \qquad Aq_{n,0} = 2 \times Ar_{n,0} - 1$$

$$Aq_{n,2} = Aq_{n,0} + 2$$

And,

$$\text{if } Ar_{n,1} \text{ is even,} \qquad Aq_{n,1} = 2 \times Ar_{n,1}$$

$$\text{else} \qquad Aq_{n,1} = 2 \times Ar_{n,1} - 1$$

$$Aq_{n,3} = Aq_{n,1} + 2$$

where $\{Aq_{n,0}, Aq_{n,1}, Aq_{n,2}, Aq_{n,3}\}$ are the addresses generated by the QPSK to QAM address block 408 if the modulation utilized is QAM.

The offset per physical channel block 411 may comprise suitable logic, circuitry and/or code that may be enabled to offset each address for the L received physical channels as follows:

$$\text{For QPSK:} \qquad Abin_{n,u,k} = Aq_{n,u} + k \times 960; \quad k = 0,\ldots,L-1; \ u = 0,1$$

$$\text{For QAM:} \qquad Abin_{n,u,k} = Aq_{n,u} + k \times 1920; \quad k = 0,\ldots,L-1; \ u = 0,1,2,3$$

where the set $(Abin_{n,u})_k$ may represent L x 2 for QPSK, or L x 4 for QAM addresses that are generated for every symbol index.

The de-rate matching address block 414 may be enabled to utilize the input bit type T as a selector that streams the input to the systematic de-rate matching address block 416, parity-1 de-rate matching address block 418 or parity-2 de-rate matching address block 420. The de-bit collection address block 412 may comprise suitable logic, circuitry and/or code that may enable receiving of the set $\{Abin_{n,u,k}\}$, which identifies the bit's location within the bit collection buffer. The de-bit collection address block 412 may generate the sequential order of the bit address as the bits were written into the bit collection buffer, where n represents the column index (0:479), k may represent a column of multiple of k x 480 and u is the row index.

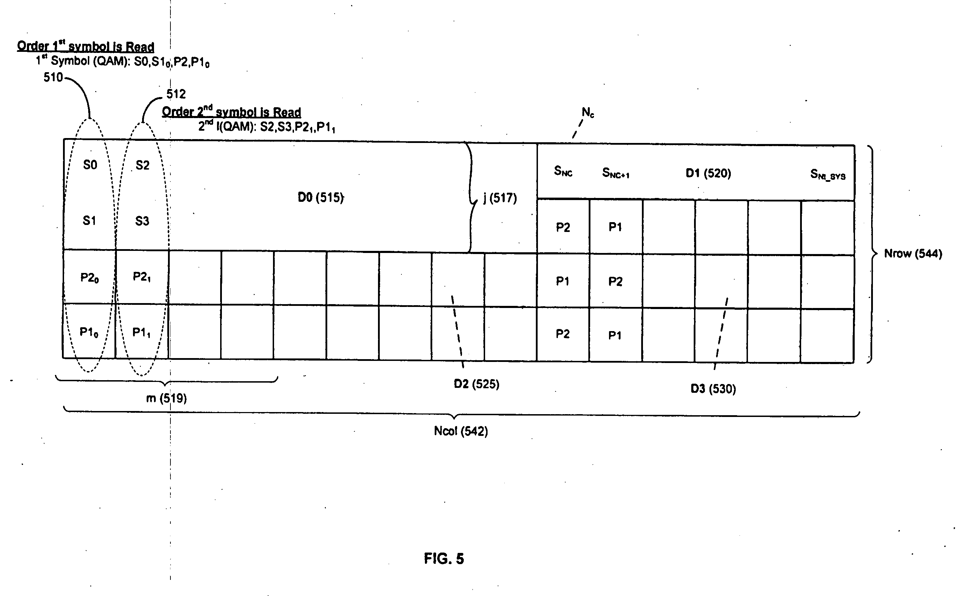

FIG. 5 is a block diagram illustrating exemplary partitioning of the bit collection buffer into a plurality of domains, in accordance with an embodiment of the invention. Referring to FIG. 5, there is shown a bit collection buffer 500. The output of the bit collection buffer 500 may be input to the HSDPA interleaver 214. An address $Abin_{n,u,k}$ may correspond to the sequential number of a bit as it is read from the bit collection buffer 500. The bit collection buffer 500 may be read column wise, where a column represents a symbol. The bit collection buffer 500 may comprise two rows, for example, for QPSK or four rows, for example, for QAM. For example, the column 510 comprises a plurality of bits S0, S1, $P2_0$ and $P1_0$, which is the first symbol received at each TTI. The values of $Abin_{0,u,0}$, are, for example, 0,1,2 and 3 for u = 0,1,2 and 3 respectively. The next symbol 512 to be read may comprise a plurality of bits S2, S3, $P2_1$, $P1_1$ with addresses 4, 5, 6 and 7 respectively. If L = 2, the receiver may be enabled to receive two symbols at a time, for example, Phy-Ch 0 and Phy-Ch 1. The values of $Abin_{0,u,1}$ for the first symbol of the Phy-Ch 1 may be, for example, 1920, 1921, 1922 and 1923 for u = 0, 1, 2 and 3 respectively. The L symbols may be read simultaneously from locations that are offset by k x 1920 for QAM or k x 960 QPSK, where k is the Phy-Ch index for k = 0 ... L-1. As a result of the interleaving process, a received symbol may comprise bits that were not located in a single column of the bit collection buffer 500.

The de-bit collection address block 412 may be enabled to identify the location (row, column) of a bit within the bit collection buffer 500. The de-bit collection address block 412 may be enabled to identify the sequential order or address in which it was written into the bit collection buffer 500 given the row and column location of the bit within the bit collection buffer 500. The bit collection buffer 500 may be filled by three streams, for example, a systematic stream for T=0 with bits 0 and 1, a parity-2 stream T=2 with bit 0 and a parity-1 stream for T=1 with bit 0.

The bit collection buffer 500 may be partitioned into four domains, for example, D0 515, D1 520, D2 525 and D3 530. A location in the bit collection buffer 500 identified by the pair of coordinates, column m 517 and row j 519 may be calculated for each bit identified by n,u,k. A location within D0 515 and D1 520 may identify the bit as a systematic bit type with T=0 and a location within D2 525 and D3 530 may indicate either parity-1 for odd locations or parity-2 for even locations.

The systematic stream may fill D0 515 and D1 520 domains, column-wise, starting at the left side. The parity bits may fill D2 525 and D3 530, alternatively, starting with the parity-2 bit (P2), as illustrated in column 510. The receiver may receive the parameters Ndata and Nt_sys at each TTI, where Ndata and Nt_sys are the total number of bits and the total number of systematic bits received respectively.

The total number of systematic bits to be transmitted, $S_{Nt\_sys}$ may dictate the partitioning of the bit collection buffer 500 into domains D0 515, D1 520, D2 525 and D3 530. The coordinates j 519, m 517 may be determined based on the given address $Abin_{n,u,k}$. The output $Abo_{n,u,k}$ may be determined by identifying the domain the bit belongs to utilizing the bit coordinates j 519 and m 517. The address $Abo_{n,u,k}$ may be calculated utilizing the order the bits were written in each domain. The bit type T may be determined from the address $Abo_{n,u,k}$ and the domain a bit is associated with.

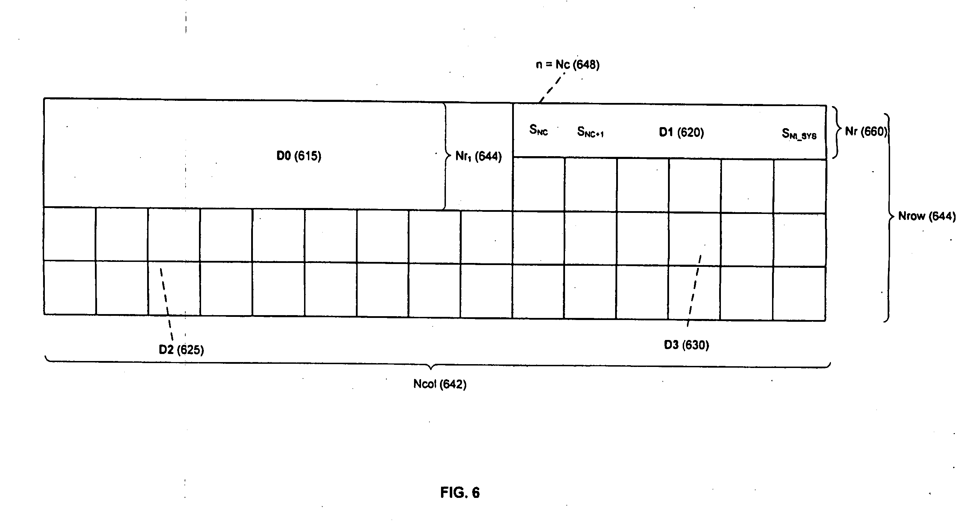

FIG. 6 is a block diagram illustrating another embodiment of an exemplary partitioning of the bit collection buffer into a plurality of domains, in accordance with an embodiment of the invention. Referring to FIG. 6, there is shown a bit collection buffer 600. The bit collection buffer 600 with dimensions Nrow 642 and Ncol 644 may be partitioned into a plurality of domains, D0 615, D1 620, D2 625 and D3 630. The value of Nrow 642 may be equal to 4 for QAM, and the value of Nrow 642 may be equal to 2 for QPSK. The de-bit collection block 412 may comprise suitable logic, circuitry, and/or code that may enable generation of addresses $Abo_{n,u,k}$ based on the following algorithm:

$$Ncol = Ndata/Nrow$$

$$Nr = Nt\_sys/Ncol$$

$$Nc = Nt\_sys - Nr \times Ncol$$

$$Nr1 = Nr$$

If Nc is equal to zero, then Nc = Ncol, else Nr1 = Nr + 1. The column index m 519, and the row index j 517 may be calculated according to the following equations:

$$j = Abin_{n,u,k} \; Modulo \; Nrow$$

$$m = (Abin_{n,u,k} - j)/Nrow$$

The domains D0 615, D1 620, D2 625 and D3 630 may be identified by the values of Nc, Nr and Nr1. A plurality of bit types may be identified according to the following equations:

$$Xs0 = (j < Nr1) \ \& \ (m < Nc)$$

$$Xs1 = (j < Nr) \ \& \ (m \geq Nc)$$

$$XpL = (j \geq Nr1) \ \& \ (m < Nc)$$

$$XpR = (j \geq Nr) \ \& \ (m \geq Nc)$$

where the variables Xs0, Xs1, XpL and XpR are Boolean type that may receive a value equal to one if the corresponding statement is true and zero otherwise. Xs0 is true if a bit is located and defined by the bit column and row number within the bit collection 600 in D0 615. Xs1 is true if a bit is located in D1 620. Both Xs0 and Xs1 may identify a bit as type T = 0 for systematic bits. If XpL or XpR is equal to one, a bit may be identified as a parity type with T =1 or T = 2. The bit input address $Abo_{n,u,k}$ may be calculated according to the following algorithm:

```
If Xs0 = 1, Abon,u,k = Nr1 x m + j
T = 0
If Xs1 = 1, Abon,u,k = Nr1 x Nc + Nr x (m - Nc) + j
T = 0
If XpL = 1,Abon,u,k = (Nrow - Nr1) x m + j - Nr1
If Abon,u,k is odd, T = 1
Else, T = 2
Abon,u,k = Abon,u,k / 2
If XpR = 1, Abon,u,k (Nrow - Nr) x m + j + Nc x (Nr - Nr1) - Nr
If Abon,u,k is odd, T = 1
Else, T = 2
Abon,u,k = Abon,u,k /2
```

The de-rate matching address block 414 may be enabled to utilize the input bit type T as a selector that streams the input $Abo_{n,u,k}$ to the systematic de-rate matching address block 416, parity-1 de-rate matching address block 418 or parity-2 de-rate matching address block 420. The user equipment may receive three sets of parameters, Eplus(T), Emin(T) and Eini(T) for T = 0,1,2 respectively through the high speed control channel. The de rate matching that provides the final address in the virtual buffer 422 may be calculated according to the following algorithm.

A plurality of TTI constants $\beta(T)$ and $\gamma(T)$ may be calculated for the final addresses at the virtual buffer 422, for each of the three incoming streams according to the following equations. For de-repetition,

$$\gamma(T) = Eplus(T) + Emin(T)$$

$$\beta(T) = -(Eplus(T) - Eini(T) + Emin(T))$$

For de-puncturing,

$$\gamma(T) = Eplus(T) - Emin(T)$$

$$\beta(T) = Eplus(T) - Eini(T)$$

where T = 0,1,2 represents the parameter sets {Eplus(T) Emin(T) Eini(T)} for systematic, parity 1 and parity 2 respectively. Each type of bit may pass through with a different rate of puncturing.

The address of each bit $Av_{n,u,k}$ (T), for T = 0,1,2 may be calculated according to the following equations. For puncturing,

$$Av_{n,u,k} (T) = \lfloor Abo_{n,u,k} \times Eplus(T) / \gamma(T) + \beta(T) / \gamma(T) \rfloor$$

For repetition,

$$Av_{n,u,k} (T) = \lceil Abo_{n,u,k} \times Eplus(T) / \gamma(T) + \beta(T) / \gamma(T) \rceil$$

where T is the bit-type flag returned by the de bit-collection function, n is the received symbol index, u equals 0,1 or 0,1,2, 3 represents the bit number in QPSK or QAM modulation respectively.

For each symbol n, the process of calculating the virtual buffer 422 address may be repeated for u = 0,1 for QPSK modulation or u = 0,1,2,3 for QAM modulation and for k = O...L-1 for L Phy-Ch. The appropriate bit amplitude calculated by the data path block 302 may be stored in virtual buffer 306, if the transmit is the first transmit of a HSDPA process. Alternatively, if there is retransmission, the current bit value may be combined with the stored value.

On completion of the HSDPA bit processing 112, the sequence of operations WCDMA bit processing 116, channel decoding 108 and bit validation 110 may be processed. The user equipment may then transmit an acknowledgement (ACK) to the base station and facilitate the receipt of a new HSDPA process data block. Alternatively, if the bit validation 110 fails, the user equipment may transmit a no-acknowledgement (NACK) to the base station and facilitate retransmission of the same HSDPA process data block.

Certain embodiments of the invention provide an exemplary hardware (HW) architecture that minimizes the complexity and power that is required for implementing HW that reverses the randomized puncturing processing. In one aspect of the invention, the exemplary hardware architecture may minimize complexity by utilizing a reduced number of gates. The reduced number of gates provides a reduction in power consumption.

In an embodiment of the invention, a method and system for handling signals in a communication system may comprise circuitry that enables partitioning processing of information bits in a received bitstream into a functional data processing path 302 and a functional address processing path 304. The partitioning enables complete calculation of a final address of at least one of the information bits in the received bitstream within a TTI. The system comprises circuitry that enables storage of the calculated final address of at least one of the information bits in the received bitstream in a virtual buffer 306 based on a value of the calculated final address. The system comprises circuitry that enables slicing of at least a portion of the information bits in the received bitstream to calculate a value of the final address. The system comprises circuitry that enables combining of at least a portion of the plurality of information bits in the received bitstream belonging to a particular symbol based on the calculated final address.

The functional data processing path 302 processes a symbol amplitude of at least one of the received plurality of information bits. The system comprises circuitry that enables partitioning of at least one symbol corresponding to a plurality of soft bits for the calculation of the final address. The functional address processing path 304 comprises at least one of a channel interleaving function 406, a QPSK to QAM addressing function 408, a channel offsetting function 411, a de-bit collecting function 412, and a de-rate-matching function 414. The de-bit collecting function 412 enables generation of a sequential order of a plurality of bit addresses for the received plurality of information bits in the received bitstream. The de-bit rate matching function 414 enables streaming of the information bits received in the bitstream into at least one of: a systematic de-rate matching function 416, a parity-1 de-rate matching function 418, and a parity-2 de-rate matching function 420 based on a bit type associated with the information bits in the received bitstream.

Accordingly, the present invention may be realized in hardware, software, or a combination of hardware and software. The present invention may be realized in a centralized fashion in at least one computer system, or in a distributed fashion where different elements are spread across several interconnected computer systems. Any kind of computer system or other apparatus adapted for carrying out the methods described herein is suited. A typical combination of hardware and software may be a general-purpose computer system with a computer program that, when being loaded and executed, controls the computer system such that it carries out the methods described herein.

The present invention may also be embedded in a computer program product, which comprises all the features enabling the implementation of the methods described herein, and which when loaded in a computer system is able to carry out these methods. Computer program in the present context means any expression, in any language, code or notation, of a set of instructions intended to cause a system having an information processing capability to perform a particular function either directly or after either or both of the following: a) conversion to another language, code or notation; b) reproduction in a different material form.

While the present invention has been described with reference to certain embodiments, it will be understood by those skilled in the art that various changes may be made and equivalents may be substituted without departing from the scope of the present invention. In addition, many modifications may be made to adapt a particular situation or material to the teachings of the present invention without departing from its scope. Therefore, it is intended that the present invention not be limited to the particular embodiment disclosed, but that the present invention will include all embodiments falling within the scope of the appended claims.

**Claims**

1.  A method for handling signals in a communication system, the method comprising:

    partitioning processing of information bits in a received bitstream into a functional data processing path (302) and a functional address processing path (304); and
    calculating a final address of at least one of said information bits in said received bitstream within a transmission time interval;
    wherein said functional address processing path (304) comprises at least one of: channel interleaving, a QPSK to QAM addressing, channel offsetting, de-bit collecting, and de-rate-matching;
    wherein said de-bit collecting generates a sequential order of a plurality of bit addresses for said information bits in said received bitstream;
    wherein said de-bit rate matching streams said information bits in said received bitstream into at least one of: systematic de-rate matching, parity-1 de-rate matching, and parity-2 de-rate matching based on a bit type associated with said information bits in said received bitstream.

2.  The method according to claim 1, further comprising storing said calculated final address of said at least one of said information bits in said received bitstream in a virtual buffer (306) based on a value of said calculated final address.

3.  The method according to claim 1, further comprising slicing at least a portion of said information bits in said received bitstream to calculate a value of said final address.

4.  The method according to claim 1, further comprising combining at least a portion of said information bits in said received bitstream belonging to a particular symbol based on said value of said calculated final address.

5.  The method according to claim 1, wherein said functional data processing path (302) processes a symbol amplitude of at least a portion of said information bits in said received bitstream.

6.  A machine-readable storage having stored thereon, a computer program having at least one code section for handling signals in a communication system, the at least one code section being executable by a machine for causing the machine to perform steps comprising:

    partitioning processing of information bits in a received bitstream into a functional data processing path (302) and a functional address processing path (304); and
    calculating a final address of at least one of said information bits in said received bitstream within a transmission time interval;
    wherein said functional address processing path (304) comprises at least one of: channel interleaving, a QPSK to QAM addressing, channel offsetting, de-bit collecting, and de-rate-matching;
    wherein said de-bit collecting generates a sequential order of a plurality of bit addresses for said information bits in said received bitstream;

wherein said de-bit rate matching streams said information bits in said received bitstream into at least one of: systematic de-rate matching, parity-1 de-rate matching, and parity-2 de-rate matching based on a bit type associated with said information bits in said received bitstream.

7. A system for handling signals in a communication system, the system comprising:

circuitry that enables partitioning processing of information bits in a received bitstream into a functional data processing path (302) and a functional address processing path (304); and
circuitry that enables calculating a final address of at least one of said information bits in said received bitstream within a transmission time interval;
wherein said functional address processing path (304) comprises at least one of: channel interleaving, a QPSK to QAM addressing, channel offsetting, de-bit collecting, and de-rate-matching;
wherein said de-bit collecting enables generation of a sequential order of a plurality of bit addresses for said information bits in said received bitstream; and
wherein said de-bit rate matching enables streaming of said information bits in said received bitstream into at least one of: systematic de-rate matching, parity-1 de-rate matching, and parity-2 de-rate matching based on a bit type associated with said information bits in said received bitstream.

8. The system according to claim 7, further comprising circuitry that enables storage of said calculated final address of said at least one of said information bits in said received bitstream in a virtual buffer (306) based on a value of said calculated final address.

9. The system according to claim 7, further comprising circuitry that enables slicing at least a portion of said information bits in said received bitstream to calculate a value of said final address.

10. The system according to claim 7, further comprising circuitry that enables combining at least a portion of said information bits in said received bitstream belonging to a particular symbol based on said value of said calculated final address.

**Patentansprüche**

1. Verfahren zur Handhabung von Signalen in einem Kommunikationssystem, wobei das Verfahren Folgendes umfasst:

Aufteilen der Verarbeitung von Informationsbits in einem empfangenen Bitstrom in einen funktionellen Datenverarbeitungspfad (302) und einen funktionellen Adressenverarbeitungspfad (304); und
Berechnen einer Endadresse von wenigstens einem der Informationsbits in dem empfangenen Bitstrom innerhalb eines
Übertragungszeitintervalls (Transmission Time Interval);
wobei der funktionelle Adressenverarbeitungspfad (304) wenigstens eines der Folgenden umfasst: Kanal-Interleaving, eine QPSK-zu-QAM-Adressierung, Kanal-Offsetting, De-Bit-Collecting und De-Rate-Matching;
wobei das De-Bit-Collecting eine sequentielle Reihenfolge einer Vielzahl von Bitadressen für die Informationsbits in dem empfangenen Bitstrom erzeugt;
wobei das De-Bit-Rate-Matching die Informationsbits in dem empfangenen Bitstrom in wenigstens eines der Folgenden fließen lässt: systematisches De-Rate-Matching, Parität-1-De-Rate-Matching und Parität-2-De-Rate-Matching, und zwar auf der Basis eines Bittyps, der mit den Informationsbits in dem empfangenen Bitstrom assoziiert ist.

2. Verfahren nach Anspruch 1, das des Weiteren das Speichern der berechneten Endadresse des wenigstens einen der Informationsbits in dem empfangenen Bitstrom in einem virtuellen Pufferspeicher (306) auf der Basis eines Wertes der berechneten Endadresse umfasst.

3. Verfahren nach Anspruch 1, das des Weiteren das Zerteilen wenigstens eines Teils der Informationsbits in dem empfangenen Bitstrom umfasst, um einen Wert der Endadresse zu berechnen.

4. Verfahren nach Anspruch 1, das des Weiteren das Kombinieren wenigstens eines Teils der Informationsbits in dem empfangenen Bitstrom, der zu einem bestimmten Symbol gehört, auf der Basis des Wertes der berechneten Endadresse umfasst.

**5.** Verfahren nach Anspruch 1, wobei der funktionelle Datenverarbeitungspfad (302) eine Symbolamplitude von wenigstens einem Teil der Informationsbits in dem empfangenen Bitstrom verarbeitet.

**6.** Maschinenlesbarer Speicher, in dem ein Computerprogramm gespeichert ist, das wenigstens einen Codeabschnitt für die Handhabung von Signalen in einem Kommunikationssystem aufweist, wobei der wenigstens eine Codeabschnitt von einer Maschine ausgeführt werden kann, um zu bewirken, dass die Maschine Schritte durchführt, die Folgendes umfassen:

Aufteilen der Verarbeitung von Informationsbits in einem empfangenen Bitstrom in einen funktionellen Datenverarbeitungspfad (302) und einen funktionellen Adressenverarbeitungspfad (304); und
Berechnen einer Endadresse von wenigstens einem der Informationsbits in dem empfangenen Bitstrom innerhalb eines
Übertragungszeitintervalls;
wobei der funktionelle Adressenverarbeitungspfad (304) wenigstens eines der Folgenden umfasst: Kanal-Interleaving, eine QPSK-zu-QAM-Adressierung, Kanal-Offsetting, De-Bit-Collecting und De-Rate-Matching;
wobei das De-Bit-Collecting eine sequentielle Reihenfolge einer Vielzahl von Bitadressen für die Informationsbits in dem empfangenen Bitstrom erzeugt;
wobei das De-Bit-Rate-Matching die Informationsbits in dem empfangenen Bitstrom in wenigstens eines von den Folgenden fließen lässt: systematisches De-Rate-Matching, Parität-1-De-Rate-Matching und Parität-2-De-Rate-Matching, und zwar auf der Basis eines Bittyps, der mit den Informationsbits in dem empfangenen Bitstrom assoziiert ist.

**7.** System zur Handhabung von Signalen in einem Kommunikationssystem, wobei das System Folgendes umfasst:

eine Schaltung, die das Aufteilen der Verarbeitung von Informationsbits in einem empfangenen Bitstrom in einen funktionellen Datenverarbeitungspfad (302) und einen funktionellen Adressenverarbeitungspfad (304) ermöglicht; und
eine Schaltung, die das Berechnen einer Endadresse von wenigstens einem der Informationsbits in dem empfangenen Bitstrom innerhalb eines Übertragungszeitintervalls ermöglicht;
wobei der funktionelle Adressenverarbeitungspfad (304) wenigstens eines der Folgenden umfasst: Kanal-Interleaving, eine QPSK-zu-QAM-Adressierung, Kanal-Offsetting, De-Bit-Collecting und De-Rate-Matching;
wobei das De-Bit-Collecting die Erzeugung einer sequentiellen Reihenfolge einer Vielzahl von Bitadressen für die Informationsbits in dem empfangenen Bitstrom ermöglicht; und
wobei das De-Bit-Rate-Matching das Fließen Lassen der Informationsbits in dem empfangenen Bitstrom in wenigstens eines der Folgenden ermöglicht: systematisches De-Rate-Matching, Parität-1-De-Rate-Matching und Parität-2-De-Rate-Matching, und zwar auf der Basis eines Bittyps, der mit den Informationsbits in dem empfangenen Bitstrom assoziiert ist.

**8.** System nach Anspruch 7, das des Weiteren eine Schaltung umfasst, die die Speicherung der berechneten Endadresse des wenigstens einen der Informationsbits in dem empfangenen Bitstrom in einem virtuellen Pufferspeicher (306) auf der Basis eines Werts der berechneten Endadresse ermöglicht.

**9.** System nach Anspruch 7, das des Weiteren eine Schaltung umfasst, die das Zerteilen wenigstens eines Teils der Informationsbits in dem empfangenen Bitstrom ermöglicht, um einen Wert der Endadresse zu berechnen.

**10.** System nach Anspruch 7, das des Weiteren eine Schaltung umfasst, die das Kombinieren wenigstens eines Teils der Informationsbits in dem empfangenen Bitstrom, der zu einem bestimmten Symbol gehört, auf der Basis des Wertes der berechneten Endadresse ermöglicht.

**Revendications**

**1.** Procédé de gestion de signaux dans un système de communication, le procédé comprenant :

le traitement par partitionnement de bits d'information dans un train de bits reçu en un chemin de traitement de données fonctionnel (302) et un chemin de traitement d'adresses fonctionnel (304) ; et
le calcul d'une adresse finale d'au moins un desdits bits d'information dans ledit train de bits reçu au sein d'un intervalle de temps de transmission ;

dans lequel ledit chemin de traitement d'adresses fonctionnel (304) comprend au moins l'un : d'un entrelacement de canaux, d'un adressage QPSK à QAM, d'un décalage de canaux, d'une interruption de récupération de bits et d'un désappariement de débit ;

dans lequel ladite interruption de récupération de bits génère un ordre séquentiel d'une pluralité d'adresses de bits pour lesdits bits d'information dans ledit train de bits reçu ;

dans lequel ledit désappariement de débit binaire transmet en continu lesdits bits d'information dans ledit train de bits reçu dans au moins l'un : d'un désappariement de débit systématique, d'un désappariement de débit de parité 1 et d'un désappariement de débit de parité 2 sur la base d'un type de bits associé avec lesdits bits d'information dans ledit train de bits reçu.

2. Procédé selon la revendication 1, comprenant en outre le stockage de ladite adresse finale calculée dudit au moins un desdits bits d'information dans ledit train de bits reçu dans un tampon virtuel (306) sur la base d'une valeur de ladite adresse finale calculée.

3. Procédé selon la revendication 1, comprenant en outre le partage d'au moins une partie desdits bits d'information dans ledit train de bits reçu pour calculer une valeur de ladite adresse finale.

4. Procédé selon la revendication 1, comprenant en outre la combinaison d'au moins une partie desdits bits d'information dans ledit train de bits reçu appartenant à un symbole particulier sur la base de ladite valeur de ladite adresse finale calculée.

5. Procédé selon la revendication 1, dans lequel ledit chemin de traitement de données fonctionnel (302) traite une amplitude de symbole d'au moins une partie desdits bits d'information dans ledit train de bits reçu.

6. Stockage lisible par une machine ayant, stocké dans celui-ci, un programme informatique ayant au moins une section de code pour gérer des signaux dans un système de communication, l'au moins une section de code étant exécutable par une machine pour faire en sorte que la machine mette en oeuvre des étapes comprenant :

le traitement par partitionnement de bits d'information dans un train de bits reçu en un chemin de traitement de données fonctionnel (302) et un chemin de traitement d'adresses fonctionnel (304) ; et

le calcul d'une adresse finale d'au moins un desdits bits d'information dans ledit train de bits reçu au sein d'un intervalle de temps de transmission ;

dans lequel ledit chemin de traitement d'adresses fonctionnel (304) comprend au moins l'un : d'un entrelacement de canaux, d'un adressage QPSK à QAM, d'un décalage de canaux, d'une interruption de récupération de bits et d'un désappariement de débit;

dans lequel ladite interruption de récupération de bits génère un ordre séquentiel d'une pluralité d'adresses de bits pour lesdits bits d'information dans ledit train de bits reçu ;

dans lequel ledit désappariement de débit de bits transmet en continu lesdits bits d'information dans ledit train de bits reçu dans au moins l'un : d'un désappariement de débit systématique, d'un désappariement de débit de parité 1 et d'un désappariement de débit de parité 2 sur la base d'un type de bits associé avec lesdits bits d'information dans ledit train de bits reçu.

7. Système de gestion de signaux dans un système de communication, le système comprenant :

un circuit qui permet le traitement par partitionnement de bits d'information dans un train de bits reçu en un chemin de traitement de données fonctionnel (302) et un chemin de traitement d'adresses fonctionnel (304) ; et

un circuit qui permet le calcul d'une adresse finale d'au moins un desdits bits d'information dans ledit train de bits reçu au sein d'un intervalle de temps de transmission ;

dans lequel ledit chemin de traitement d'adresses fonctionnel (304) comprend au moins l'un : d'un entrelacement de canaux, d'un adressage QPSK à QAM, d'un décalage de canaux, d'une interruption de récupération de bits et d'un désappariement de débit ;

dans lequel ladite interruption de récupération de bits permet la génération d'un ordre séquentiel d'une pluralité d'adresses de bits pour lesdits bits d'information dans ledit train de bits reçu ;

dans lequel ledit désappariement de débit de bits permet la transmission en continu desdits bits d'information dans ledit train de bits reçu dans au moins l'un : d'un désappariement de débit systématique, d'un désappariement de débit de parité 1 et d'un désappariement de débit de parité 2 sur la base d'un type de bits associé avec lesdits bits d'information dans ledit train de bits reçu.

**8.** Système selon la revendication 7, comprenant en outre un circuit qui permet le stockage de ladite adresse finale calculée dudit au moins un desdits bits d'information dans ledit train de bits reçu dans un tampon virtuel (306) sur la base d'une valeur de ladite adresse finale calculée.

**9.** Système selon la revendication 7, comprenant en outre un circuit qui permet le partage d'au moins une partie desdits bits d'information dans ledit train de bits reçu pour calculer une valeur de ladite adresse finale.

**10.** Système selon la revendication 7, comprenant en outre un circuit qui permet la combinaison d'au moins une partie desdits bits d'information dans ledit train de bits reçu appartenant à un symbole particulier sur la base de ladite valeur de ladite adresse finale calculée.

**FIG. 1A**

FIG. 1B

FIG. 2

EP 1 819 117 B1

QPSK QAM Soft Bits
QPSK:    $\{I_n, Q_n\}_k$
QAM:     $\{I1_n, Q1_n\}_k$
         $\{I2_n, Q2_n\}_k$

$\underline{k = 0:L-1; \; L \; 1:15}$

$\{I_n, Q_n\}_k$

Data Path

302

n

Address Path

304

Virtual Buffer

306

VB Punctured/Repeated addresses
Addresses:
QPSK: $\{Av_{n,0} \; Av_{n,1}\}_k$
QAM:  $\{Av_{n,0} \; Av_{n,1} \; Av_{n,2} \; Av_{n,3}\}_k$

FIG. 3

FIG. 4

Order 1st symbol is Read
1st Symbol (QAM): S0,S1$_0$,P2,P1$_0$

510

512

Order 2nd symbol is Read
2nd I(QAM): S2,S3,P2$_1$,P1$_1$

N$_c$

| S0 | S2 | D0 (515) | j (517) | S$_{NC}$ | S$_{NC+1}$ | D1 (520) | S$_{NI\_SYS}$ |
| S1 | S3 | | | P2 | P1 | | |
| P2$_0$ | P2$_1$ | | | P1 | P2 | | |
| P1$_0$ | P1$_1$ | | | P2 | P1 | | |

Nrow (544)

m (519)

D2 (525)

D3 (530)

Ncol (542)

FIG. 5

EP 1 819 117 B1

n = Nc (648)

| $S_{NC}$ | $S_{NC+1}$ | D1 (620) | $S_{M\_SYS}$ |

D0 (615)

$Nr_1$ (644)

Nr (660)

Nrow (644)

D2 (625)

D3 (630)

Ncol (642)

**FIG. 6**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0608079 A
- US 2005091567 A
- US 5710785 A